# EUROPEAN PATENT SPECIFICATION

(11) **EP 2 023 091 B1**
(45) Date of publication and mention of the grant of the patent: **25.09.2013**
(21) Application number: 08161074.3
(22) Date of filing: 24.07.2008
(51) Int. Cl.: G01C 21/36

(54) **Navigation device and navigation program**
Navigationsvorrichtung und Navigationsprogramm
Dispositif et programme de navigation

(30) Priority: 10.08.2007 JP 2007210389
(43) Date of publication of application: 11.02.2009
(73) Proprietor: Aisin AW Co., Ltd., Fujii-cho Anjo-shi Aichi 444-1192 (JP)
(72) Inventor: Sakai, Takamitsu, Aichi 444-8564 (JP)
(74) Representative: Vossius & Partner

(56) References cited:
- WO-A1-2005/080139
- DE-A1- 19 835 422
- JP-A- 2002 372 432
- JP-A- 2006 030 615
- US-B2- 6 539 289

## Description

The present invention relates to a navigation device and a navigation program, such as those for displaying guidance information on a screen.

The use of a navigation device to guide a vehicle has been growing remarkably in recent years. The navigation device includes functions such as the following: a function for searching for a route from a departure point to a destination, a function for detecting a position of a host vehicle using a global positioning system (GPS) satellite and sensors such as a gyro, and a function for displaying the route to the destination and a current position of the host vehicle on a map.

The navigation device displays guidance information on a display screen. But in order to display more information, a display with a wide width, otherwise known as a wide screen or the like, is needed. The wide screen has a horizontal width that is, for example, approximately 1.5 to 2 times wider than a conventional display screen. In addition, the wide screen faces the driver seat and the passenger seat, and is installed in an area positioned between the driver seat and the passenger seat. With the wide screen, more information can be displayed within one screen by displaying screens of a conventional size in an aligned manner or by enlarging a display range. Art related to a navigation device with such a wide screen can be found in a car navigation system disclosed in JP-A-H11-258983.

This art rotatably supports the wide screen to enable horizontal and vertical setting of a length direction of the wide screen. Accordingly, a navigation system displays a horizontally long map when the wide screen is set horizontal and displays a vertically long map when the wide screen is set vertical.

JP- 2006-030615 A discloses a system for displaying characters with a display size corresponding to the viewing angle. A similar system is disclosed in DE 198 35 422 A1. WO 2005/080139 discloses a display device changing the display state.

However, the display is often viewed at an angle within the vehicle. For this reason, although the display of the near side of the wide screen is easily visible, the display of the far side is difficult to see since it is viewed from a distance.

Hence, it is an object of the present invention to facilitate viewing of a display on a side far from a user.

According to a first aspect of the present invention, displaying guidance information on a side far from a user more enlarged than guidance information displayed on a side near the user facilitates viewing of the display on the far side by the user.

According to a second aspect of the present invention, by obtaining a position of the user, guidance information on the side far from the user can be enlarged and displayed regardless of the side of a display screen where the user is positioned.

According to a third aspect of the present invention, if the guidance information cannot be completely displayed due to enlargement, then items of low priority can be deleted.

According to a fourth aspect of the present invention, if the guidance information cannot be completely displayed due to enlargement, then a magnification rate of items of low priority can be reduced.

According to a fifth aspect of the present invention, guidance information can be displayed so as to fit in the display screen.

According to a sixth aspect of the present invention, a plurality of display states of guidance information can be used and modified as appropriate so as to enable the display of easily viewable guidance information while reducing display space.

According to a seventh aspect of the present invention, a computer program can be provided that realizes through a computer a function for displaying guidance information on a side far from a user more enlarged than guidance information displayed on a side near the user.
The invention is further described with reference to the drawings:
FIG. 1 shows displays of a navigation device;
FIG. 2 is a system configuration diagram of the navigation device;
FIG. 3 shows drawings for explaining guidance information displayed on a display;
FIG. 4 shows drawings for explaining a method of adjusting a display state of the guidance information;
FIG. 5 shows drawings for explaining modifications of the display state of the display; and
FIG. 6 is a flowchart for explaining a procedure for displaying the guidance information.

### (1) Overview of the Embodiment

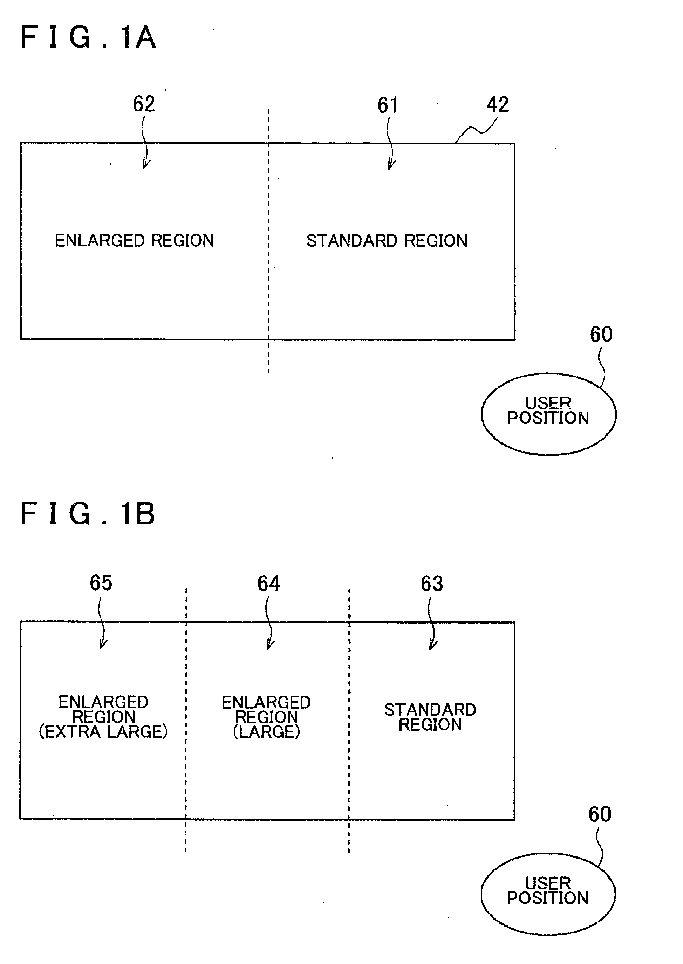

The drawings of FIG. 1 show displays of a navigation device according to an embodiment. A display 42 is installed in front of and in between a driver seat and a passenger seat so as to face a driver and an occupant sitting in the passenger seat. The display 42 has a horizontal width that is approximately 1.5 to 2 times wider than an ordinary display, and structures a so-called wide screen. Various guidance information is displayed on the display 42 including maps and roads, as well as an orientation, a remaining distance to a destination, an estimated arrival time, place names, facility names, facility markers, and the like.

FIG. 1A shows the display 42 equally divided into two regions, a standard region 61 and an enlarged region 62. The user position 60 is at an angle with respect to the display 42. The standard region 61 is formed on a side near the user position 60 and the enlarged region 62 is formed on a side far from the user.

When the navigation device displays guidance information on the display 42, information displayed in the standard region 61 is displayed at a standard scale, while information displayed in the enlarged region 62 is displayed enlarged. Since the display on the side far from the user position 60 is thus enlarged, the user can more easily view guidance information on the far side of the display 42.

FIG. 1B shows the display 42 divided into three regions. In order of closeness to the user, the regions are a standard region 63, an enlarged region (large) 64, and an enlarged region (extra large) 65. In the standard region 63, the navigation device displays guidance information at a standard scale. In the enlarged region (large) 64, the navigation device displays guidance information at a scale greater than that in the standard region 63. And in the enlarged region (extra large) 65, the navigation device displays guidance information at a scale greater than that in the enlarged region (large) 64. In this example as well, since the guidance information is enlarged more as the distance from the user position 60 increases, guidance information on a side far from the user position 60 can be more easily viewed. In addition, various modifications are conceivable, such as further dividing the display 42 or continuously increasing the magnification rate in accordance with moving from a side near the user position 60 to a side farther therefrom.

### (2) Details of the Embodiment

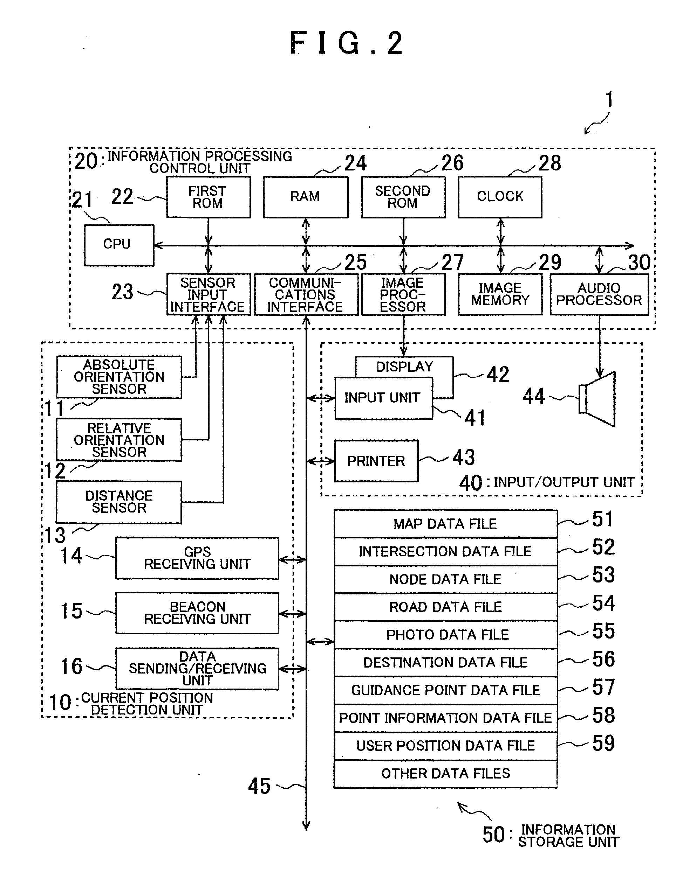

FIG. 2 is a system configuration diagram of a navigation device 1 to which the present embodiment is applied. The navigation device 1 is mounted in a vehicle, and as shown in the figure, includes a current position detection unit 10, an information processing control unit 20, an input/output unit 40, and an information storage unit 50. The current position detection unit 10 has the following structure. An absolute orientation sensor 11 is a geomagnetic sensor that detects in which direction the vehicle is positioned based on detection of the N direction according to a magnet. However, the absolute orientation sensor 11 is not limited provided that it is a mechanism for detecting an absolute direction.

The relative orientation sensor 12 detects whether to turn at an intersection, for example, and may be an optical rotation sensor or rotation type resistance volume attached to a rotating portion of a steering wheel, or an angular sensor attached to a vehicle wheel portion. The relative orientation sensor 12 may also employ a gyro sensor that uses angular velocity to detect angular changes. In other words, the relative orientation sensor 12 is not limited provided that it is capable of detecting an angle that has changed relative to a reference angle (absolute orientation). A distance sensor 13 may be one that detects and counts rotations of the wheel, or one that detects an acceleration and performs integration twice. In other words, the distance sensor 13 is not limited provided that it is capable of measuring a movement distance of the vehicle.

A GPS receiving unit 14 is a device that receives a signal from an artificial satellite, and is capable of obtaining various information such as a signal's time of origin, position information of the receiving unit, movement speed of the receiving unit, and travel direction of the receiving unit. A beacon receiving unit 15 is a device that receives a signal sent from a sending unit installed at a specific point. In particular, the beacon receiving unit 15 is capable of obtaining VICS information and also capable of obtaining information pertaining to vehicle travel, such as congestion information, current position information, and parking information. Thus, the navigation device 1 is provided with a current position acquisition (detection) unit.

A data sending/receiving unit 16 uses telephone lines and radio waves to communicate with outside the vehicle, and is a device for exchanging information. For example, there are various methods such as a car telephone, ATIS, VICS, GPS correction, and inter-vehicle communication that enable the input and output of information pertaining to travel.

The information processing control unit 20 performs computing and controls based on information input from the current position detection unit 10 and the input/output unit 40, and information stored in the information storage unit 50. Furthermore, the information processing control unit 20 is a mechanism that controls so as to output a computing result to an output unit such as the display 42, a printer 43, or a speaker 44.

The information processing control unit 20 has the following structure. A central processing unit (CPU) 21 performs general computing and controls for the entire navigation device 1. A first ROM 22 stores programs pertaining to navigation. In particular, the first ROM 22 stores a navigation program that searches for point information required for guidance of a route to a destination, outputs the searched point information to a RAM 24 or the like for image display and audio output, and uses a point information data file 58 or the like to search based on a reading of a point name. A sensor input interface 23 is a mechanism that receives information from the current position detection unit 10.

The RAM 24 is a storage mechanism that records information input by the user such as information regarding destinations and pass-through points, and also stores results computed by the CPU 21 based on the information input by the user, results of route searches, and map information (that also includes the point information) read from the information storage unit 50. A communications interface 25 is a mechanism for inputting and outputting information from the current position detection unit 10, especially information obtained from outside.

A second ROM 26 stores programs pertaining to navigation, and in particular stores a navigation program pertaining to audio guidance. An image processor 27 is a processing mechanism for converting vector information processed by the CPU 21 into image information. A clock 28 counts time. An image memory 29 is a mechanism that stores the image information processed by the image processor 27. An audio processor 30 processes audio information read from the information storage unit 50 and outputs such information to the speaker 44.

The input/output unit 40 is structured from the following: an input unit 41 that inputs data including a destination, pass-through points, and search conditions from the user; the display 42 that displays images, guidance information, and the like; the printer 43 that prints information; and the speaker 44 that outputs sound. The display 42 is a wide screen display, and is installed near the front and center of the driver seat and the passenger seat so as to face the driver seat and the passenger seat, with a horizontal direction thereof becoming a length direction. The display 42 functions as a display device that displays guidance information to the user.

The input unit 41 is structured from a touch panel, a touch switch, a joystick, or a key switch, for example. The touch panel is structured from a transparent electrode or the like installed on the display 24, and is capable of detecting a position at which the user touched the display 42.

The information storage unit 50 is connected with the information processing control unit 20 via a transmission line 45. Furthermore, the information storage unit 50 stores a map data file 51, an intersection data file 52, a node data file 53, a road data file 54, a photo data file 55, a destination data file 56, a guidance point data file 57, the point information data file 58, a user position data file 59, and other data files. In general, the information storage unit 50 is structured by a hard disk, a flash memory, or the like, that is, a rewritable storage medium, but may also be used in combination with a ROM such as a CD-ROM or a DVD-ROM.

The map data file 51 stores map data such as nation-wide road maps, road maps for arbitrary regions, and residential maps. The road maps are formed from roads including main highways, expressways, and city streets (relatively narrow roads), and from landmarks (facilities and the like). The residential maps include city plans that show graphics representing the outlines of buildings and the like, and also show road names and other information.

The intersection data file 52 stores data pertaining to geographic position coordinates and names of intersections, and the like. The node data file 53 stores geographic coordinate data and the like for nodes, which are used for route searches on maps. The road data file 54 stores data pertaining to roads, such as road locations and types, the number of vehicle lanes, and connection relationships between roads.

The photo data file 55 stores computer graphic image data and image data of photos showing various facilities and sightseeing spots, as well as locations where visual display is required such as main intersections and the like. The destination data file 56 stores data including the locations and names of facilities and other places that are highly likely to become destinations, such as major sightseeing spots and buildings, as well as businesses and offices listed in telephone books. The guidance point data file 57 stores guidance data of points for which guidance is needed, such as guidance regarding branch points and the content of guidance signs placed along roads.

The point information data file 58 is a file for storing point information. Point information is also called point-of-interest (POI) information, and for example, includes information such as the displayed characters of point names, the readings of displayed characters, information corresponding to the displayed characters and readings, as well as information pertaining to coordinates, addresses, telephone numbers, and other items regarding points that users may be interested in for route guidance or the like. Examples of such points include stadiums, theaters, shops such as restaurants and department stores, schools, government buildings, welfare institutions, head offices and branches of private companies, sightseeing spots, and so on. The point information functions as search targets.

The user position data file 59 is a file that stores user position data. The user position data is information that specifies on which side of the display 42 the user is positioned facing. The navigation device 1 sets the enlarged region in the display 42 on the side far from the side specified in the user position data, and set the standard region on the near side.

The user position data may be configured to enable manual setting by the user, or configured to enable automatic setting. In the case of automatic setting, for example, both ends of the display 42 are equipped with human body sensors that utilize infrared light or the like. When the touch panel on the display 42 is touched, the sensors can detect from which side the hand came from in order to determine the user position. Furthermore, a configuration is also possible where the driver side is set in advance as the standard region and the passenger side is set as the enlarged region, and neither can be changed.

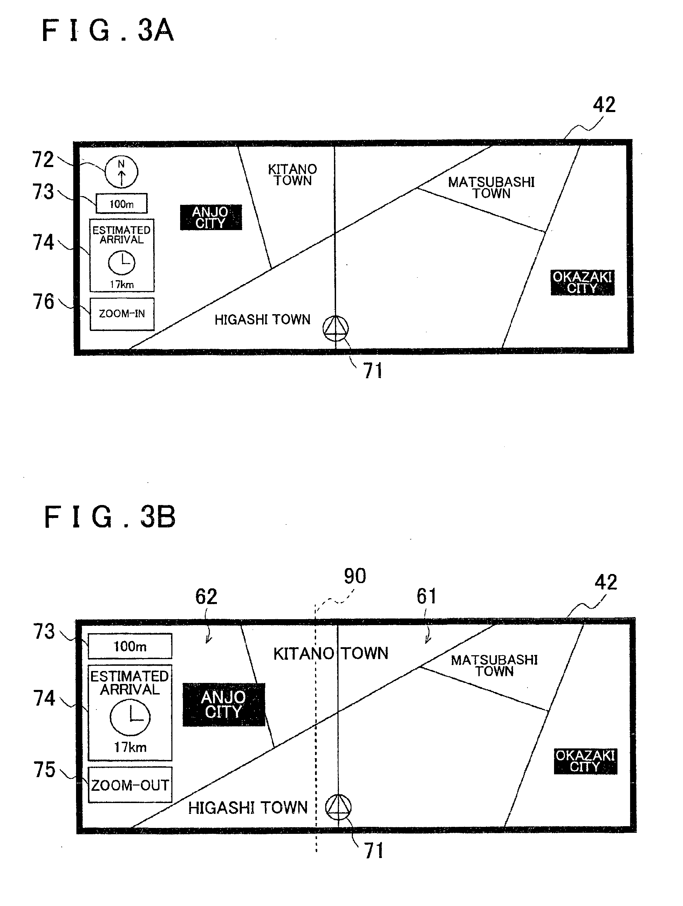

Next, the guidance information displayed on the display 42 will be explained using the drawings in FIG. 3. In the navigation device 1, the user can select between a standard mode in which the standard region fills the entire display 42, and an enlarged mode in which the side near the user is designated as the standard region and the side far from the user is designated as the enlarged region.

FIG. 3A shows the case where the user has selected the standard mode, and the entire display 42 is used as the standard region. The navigation device 1 uses various data stored in the information storage unit 50 to form an image that is then displayed on the display 42.

In the example of FIG. 3A, a map, a host vehicle marker 71, an orientation marker 72, a distance marker 73, an estimated arrival time 74, a zoom-in button 76, and various place names such as "Anjo City" are displayed on the display 42. Also, facilities such as restaurants (not shown) can be displayed as facility markers represented by graphics, symbols, or the like.

These display elements are displayed on the display 42 by the navigation device 1 using various data stored in the information storage unit 50. The navigation device 1 can control the display position, size, and showing/hiding of the display elements independent of one another. The display elements are information for guiding a route of the vehicle, and therefore function as guidance information.

The host vehicle marker 71 indicates the position of the traveling host vehicle, and is displayed on a route. The host vehicle marker 71 has a triangle within a circle, and the apex of the triangle represents the direction of travel.

The left side of the screen displays the orientation marker 72, the distance marker 73, the estimated arrival marker 74, and the zoom-in button 76. The orientation marker 72 indicates the direction in which the host vehicle is traveling. The distance marker 73 indicates the distance to a point at which a change in course occurs, such as a right turn at an intersection.

The estimated arrival marker 74 indicates the estimated time of arrival at the destination and the distance to the destination. The zoom-in button 76 is a button the user touches in order to switch to the enlarged mode. Various place names such as Anjo City, Okazaki City, Kitano Town, Matsubashi Town, and Higashi Town are represented by characters.

A coordinate system is set on the display screen of the display 42, and positions on the display screen can be specified through coordinate values. Meanwhile the guidance information is designated with minimum rectangular regions that contain guidance information, and one corner of a rectangular region (e.g. a lower left corner) is designated as a reference point. The navigation device 1 places the reference point of the guidance information on the coordinate system of the display screen, thereby specifying a display position of the guidance information on the display 42.

FIG. 3B shows the case where the user has selected the enlarged mode, and the right half of the display 42 is set as the standard region 61 while the left half is set as the enlarged region 62. In the example of the present embodiment, the boundary line between the standard region 61 and the enlarged region 62 is a position (a dotted line 90) where the width of the display 42 is divided 45:55, using the side far from the user as a reference. Note that this is merely an example, and various other cases such as where the two halves are divided 50:50 or 60:40 are also possible.

For example, a display scale of guidance information displayed in the standard region 61, such as the characters "Matsubashi Town" and "Okazaki City" and the host vehicle marker 71, is set to the same standard scale as used in the standard mode. However, the characters "Kitano Town", "Higashi Town" and "Anjo City" as well as the distance marker 73, the estimated arrival marker 74, a zoom-out button 75, and the like in the enlarged region 62 are displayed at an enlarged scale that is greater than the standard scale.

Note that the zoom-out button 75 is a button the user touches in order to switch to the standard mode. Button types such as the zoom-out button 75 are displayed at the enlarged scale when displayed in the enlarged region 62.

Based on the coordinate value of the reference point in the guidance information, the navigation device 1 determiners whether the guidance information is displayed in the standard region 61 or the enlarged region 62. And as described above, in the case of display in the standard region 61, a standard scale is applied, while in the case of display in the enlarged region 62, an enlarged scale is applied. Therefore, a display on the side far from the user is displayed enlarged, and the user can more easily view the guidance information on the side far from himself or herself.

Note that in the example of FIG. 3B, enlargement of a map among the guidance information in the enlarged region 62 interferes with the continuity of the map in the standard region 61 and the enlarged region 62. For this reason, the map in the enlarged region 62 is not enlarged. Thus, the navigation device 1 is capable of selective enlargement, rather than uniform enlargement of the guidance information belonging in the enlarged region 62.

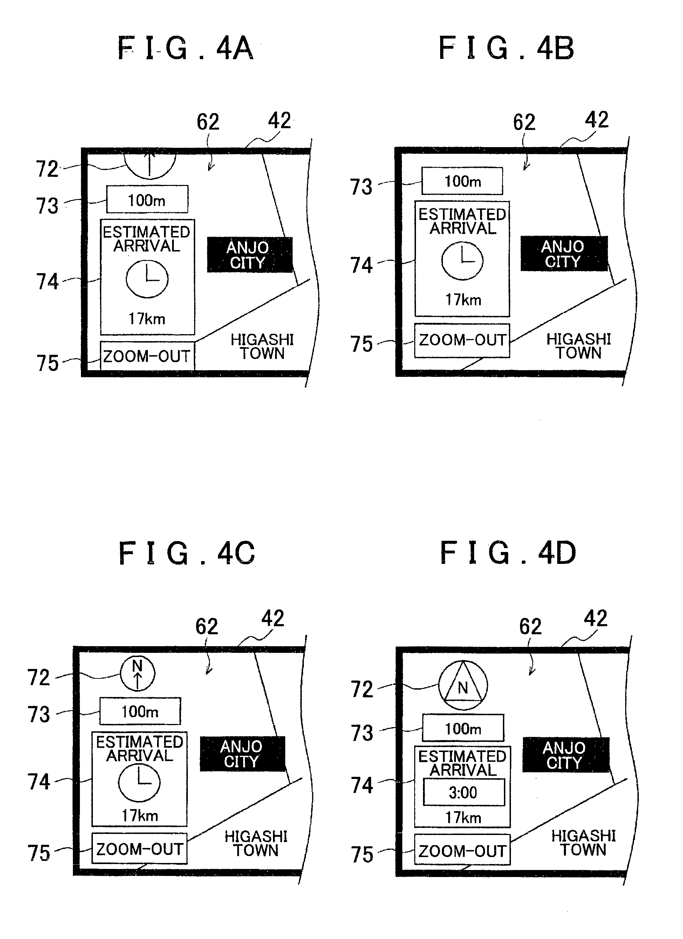

Next, a method for adjusting a display state when the guidance information is displayed in the enlarged region 62 will be explained using the drawings in FIG. 4.
FIG. 4A shows an enlarged scale applied to the guidance information, which is displayed without any adjustment in the enlarged region 62. In this example, display positions for an upper part of the orientation marker 72 and a lower part of the zoom-out button 75 are outside of the display 42 and therefore not shown.

Thus, when the guidance information is displayed enlarged in the enlarged region 62, there are cases where all of the guidance information cannot be displayed on the display 42. In such cases, the navigation device 1 can adjust the display state of the guidance information in the following manner.

FIG. 4B shows the orientation marker 72 deleted in order to secure display space for the distance marker 73, the estimated, arrival marker 74, and the zoom-out button 75. As explained earlier, the guidance information is associated with minimum rectangular regions that include guidance information. When arranging the guidance information on the display screen, the navigation device 1 confirms if all or a portion of the rectangular regions are inside the display screen, or if all the rectangular regions are outside the display screen. Accordingly, the navigation device 1 detects if all or a portion of the guidance information is displayed inside the display screen, or if none of the guidance information is displayed on the display screen.

Using this detection function, the navigation device 1 can detect that only a portion of the orientation marker 72 and the zoom-out button 75 are displayed in FIG. 4A. The guidance information is prioritized, and in cases where there is non-displayed guidance information or partially-displayed guidance information, the navigation device 1 deletes guidance information with low priority in order to secure display space.

In this manner, the guidance information is prioritized in the navigation device 1 and if the display positions of guidance information on the side far from the user are outside the display screen of the display device (the display 42), then the navigation device 1 deletes guidance information with low priority in order to display higher priority guidance information.

In the example of FIG. 4B, the priority of the orientation marker 72 is set lower than that of the distance marker 73, the estimated arrival marker 74, and the zoom-out button 75. Therefore, the orientation marker 72 is deleted. Following the deletion of one piece of guidance information, if at least a portion of the guidance information is still not displayed, then another piece of guidance information with the lowest priority is further deleted. In cases where a plurality of guidance information with the lowest priority exists, then deletion is performed in any type of order, for example, deleting those from the top of the screen first and so on.

The above example deletes low priority guidance information. However, it is also possible to secure display space by setting the magnification rate of low priority guidance information smaller than that of other guidance information. Tn FIG. 4C, since the priority of the orientation marker 72 is set lower than that of other guidance information, the magnification rate of the orientation marker 72 is set smaller than that of other guidance information. Accordingly, display space can be secured for enlarging and displaying other guidance information with higher priority. Also, a vertical-direction magnification rate of the estimated arrival marker 74 is set smaller than a horizontal-direction magnification rate, which contributes to securing display space.

In this manner, the guidance information is prioritized in the navigation device 1 and if the display positions of guidance information on the side far from the user is outside the display screen of the display device (the display 42), then the navigation device 1 sets the magnification rate of the guidance information with low priority smaller than the magnification rate of higher priority guidance information. Furthermore, the vertical-direction and horizontal-direction magnification rates can be changed in order to modify and display guidance information.

Although not shown, all of the guidance information can be structured such that the magnification rate thereof is set in a range for display in the enlarged region 62. If the magnification rate is set in a range enabling the display of all the guidance information, then displaying the guidance information at the maximun magnification rate that enables the display of all the guidance information allows the guidance information to be enlarged to the greatest possible extent. In this manner, if the display positions of guidance information on the side far from the user are outside the display screen of the display device (the display 42), then the navigation device 1 can also be configured so as to enlarge the guidance information in a range that enables display of the guidance information on the display screen.

As shown in FIG. 4D, it is also possible to secure display space by changing the display state of the guidance information so as to facilitate viewing even when the magnification rate of an image is kept small. In this case, the navigation device 1 stores a database that records combinations of guidance information and display states for each magnification rate in the information storage unit 50. After setting the magnification rate for the various guidance information, the navigation device 1 then reads out the display state pertaining to the magnification rate and displays the guidance information on the display 42. Setting of the magnification rate can be performed, for example, by prioritizing the guidance information and apportioning larger magnification rates to higher priority guidance information so that all the guidance information is displayed.

For example, regarding the orientation marker 72 in FIG. 4D, a triangle and letter N that serve as characteristic parts indicating the north direction account for a large portion of the display state of the guidance information. Since this portion is enlarged in the guidance information, the north direction can be easily recognized even from afar without increasing the magnification rate of the guidance information itself. Accordingly, the display space can be conserved while also facilitating recognition from afar.

For the estimated arrival marker 74, changing the display of the estimated arrival time from an analog clock display to a digital display achieves a state that is easy to view from afar without increasing the magnification rate. Thus, preparing easy-to-see display states according to the magnification rate enables various combinations of display states and magnification rates of guidance information. This in turn allows the navigation device 1 to provide the user with appropriate display screens. As such, the navigation device 1 can set the magnification rate of guidance information so that the guidance information is displayed on the display screen (the display 42), and can also display a display state in accordance with the set magnification rate.

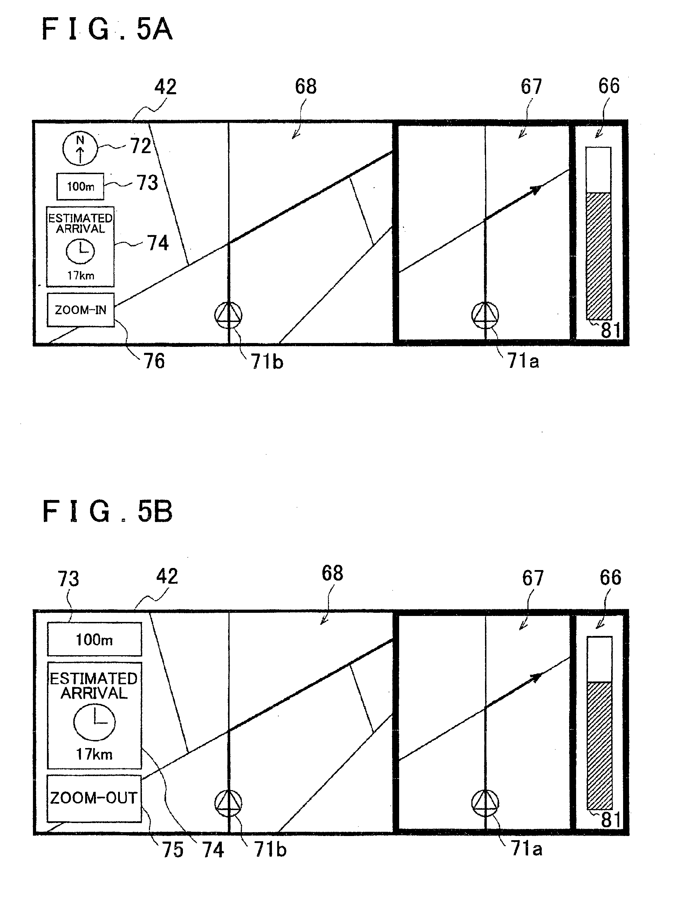

Display states of the display 42 according to other examples will be explained next. In the example of FIG. 5A, the display 42 is formed with three regions, a remaining distance display region 66, a detail display region 67, and a large-area display region 68. Note that the large-area display region 68 is positioned on the side far from the user. Based on a remaining distance indicator 81, the remaining distance display region 66 displays a distance up to a point where a change in course occurs, such as at an intersection.

The detail display region 67 displays the surroundings of the current position of the host vehicle according to a host vehicle marker 71 a, and guides a course along the route. The large-area display region 68 displays the surroundings of the current position of the host vehicle according to a host vehicle marker 71b, and also displays the orientation marker 72, the distance marker 73, the estimated arrival marker 74, the zoom-in button 76, and the like. FIG. 5A is a display in standard mode where the large-area display region 68 is not shown enlarged. If the user touches the zoom-in button 76, then the navigation device 1 displays the large-area display region 68 enlarged.

FIG. 5B shows the large-area display region 68 displayed enlarged in the enlarged mode. The large-area display region 68 enlarges and displays the distance marker 73, the estimated arrival marker 74, and the zoom-in button 75, while the orientation marker 72 is deleted due to its low priority status. The display of the remaining distance display region 66 and the detail display region 67 is the same as in the standard mode.

In recent years, a display called duel display has been developed. This involves simultaneously forming two images, a first image and a second image, on the display such that a user viewing the display from a first side sees the first image and another user viewing the display from a second side sees the second image. In this case, the navigation device 1 enlarges and displays guidance information on the second side with respect to the user, and enlarges and displays guidance information on the first side with respect to the other user.

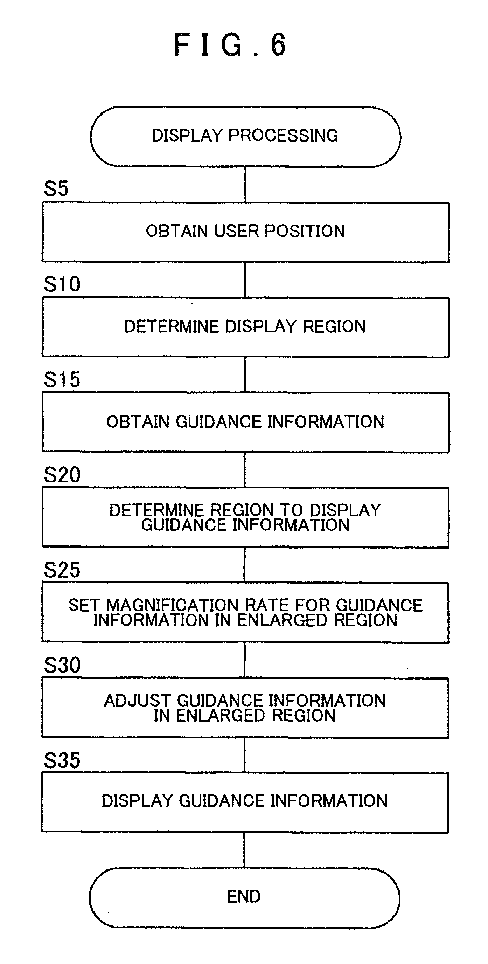

Next, a procedure by which the navigation device 1 displays guidance information will be explained using the flowchart in FIG. 6. Note that the display 42 is set to the enlarged mode. First, the navigation device 1 obtains the user position from the user position data of the user position data file 59 (step 5). Thus, the navigation device 1 is provided with a position acquisition unit for obtaining the position of the user.

The navigation device 1 then identifies the sides near to and far from the user based on the user position and sets the standard region 61 and the enlarged region 62 in the display 42 accordingly (step 10). In this manner, the navigation device 1 uses the obtained user position to determine the side of the display device (the display 42) near the user and the side far from the user.

The navigation device 1 subsequently obtains the guidance information to be displayed on the display 42 from the information storage unit 50 (step 15). Thus, the navigation device 1 is provided with a guidance information acquisition unit for obtaining guidance information. Next, by confirming whether the reference point of the guidance information is positioned in the standard region 61 or the enlarged region 62, the navigation device 1 determines the guidance information display region for each piece of guidance information (step 20).

Thereafter, the navigation device 1 sets a predetermined magnification rate for the guidance information to be displayed on the display 62 (step 25). For enlargement of the guidance information, the navigation device 1 confirms whether at least a portion of the guidance information is positioned outside of the display screen (i.e., whether the guidance information runs off the screen). If there is at least a portion positioned outside of the display screen, then the navigation device 1 adjusts the display state of the guidance information in the enlarged region 62 by for example, securing display space through the deletion of lower priority guidance information or the like and by changing the display position of the guidance information (step 30).

As described above, once the display position and the magnification rate of the guidance information to be displayed in the enlarged region 62 is set, the navigation device 1 displays the guidance information at the applicable display position and magnification rate with respect to the enlarged region 62, and displays the guidance information at the normal display position and magnification rate with respect to the standard region 61 (step 35). Thus, the navigation device 1 is provided with a display unit that displays guidance information on the display device (the display 42) such that guidance information to be displayed on the side far from the user is displayed more enlarged than guidance information to displayed on the side near the user. After completing the above, the navigation device 1 ends processing for displaying guidance information on the display 42.

Effects such as the following can be obtained from the above-described embodiment.
(1) The navigation device 1 enlarges a display on the side far from the user, and is thus capable of improving visibility of the display on the side far from the user when the user views the display 42 at an angle.
(2) In cases where the guidance information does not fit in the display screen after enlargement, the navigation device 1 is capable of adjusting the display content so that the required guidance information is displayed by adjusting the display position and display state of the guidance information.
(3) The navigation device 1 is capable of enlarging and displaying guidance information on the side far from the user regardless of the side of the display 42 where the user is positioned.
(4) The navigation device 1 is capable of setting the display size of guidance information with respect to the display 42 in accordance with the distance from the viewing side (namely, enlarging the display on the far side).
(5) The navigation device 1 is capable of using a sensor or the like to identify or estimate the user position, and in such case is capable of determining the side in view of the user position.
(6) In the case of a dual display, the navigation device 1 is capable of enlarging the guidance information in accordance with respective viewing directions.
(7) The navigation device 1 is capable of enlarging and displaying the guidance information in accordance with a magnification rate so that all or a portion of the guidance information does not run off the display screen.
(8) If the enlarged and displayed guidance information runs off the display screen, then the navigation device 1 is capable of adjustment by selectively deleting guidance information or changing the display position or magnification rate so that portions determined as more important do not run off the screen.
(9) Portions positioned on a far end of the display screen are more easily viewable, and the enlargement of buttons enables their easier operation.

Note that although the above embodiment described the display 42 as a wide screen display, the display 42 is not limited to a wide screen display. Art for displaying guidance information according to the present embodiment may also be applied to an ordinary display. Also possible, for example, is changing the magnification rate depending on the distance to the user, such as by using laser light or the like to measure a distance from the display 42 to the user, and increasing the magnification rate in accordance with a greater distance to the user.

## Claims

1. A vehicle navigation device comprising:
(a) a display device (42) comprising a display screen and adapted to display guidance information to a driver, wherein the display screen comprises at least a first (61) and a second (62) display region, the first display region (61) being closer to the driver's position (60) than the second display region (62);
(b) a guidance information acquisition unit adapted to obtain the guidance information; and
(c) a display unit adapted to display the obtained guidance information on the display device (42) such that the display size of the guidance information displayed in the second display region (62) is larger than the display size of the guidance information displayed in the first display region (61),
**characterized in that**
(d) the guidance information is prioritized, and the display unit is adapted to set a magnification rate of the guidance information with low priority smaller than that of the guidance information with high priority if the display position of the guidance information for the second display region (62) is outside the display screen of the display device (42) due to enlargement of the guidance information.

2. The vehicle navigation device according to claim 1 comprising a position acquisition unit adapted to obtain a position (60) of the driver, wherein the display unit uses the obtained position to determine the side of the display device near the driver and the side far from the driver.

3. The vehicle navigation device according to claim 1 or 2, wherein the display unit is adapted to change a display state of the guidance information so that the guidance information is displayed on the display screen.

4. A vehicle navigation program using a computer to realize a guidance information acquisition function for obtaining guidance information, and for obtaining a driver's position, and
a display function for displaying the obtained guidance information on a display device with a display screen, wherein the display screen comprises at least a first (61) and a second (62) display region, the first display region (61) being closer to the driver's position (60) than the second display region (62), such that the display size of the guidance information to be displayed in the second display region is larger than the display size of the guidance information to be displayed in the first display region,
**characterized in that** the guidance information is prioritized, and the display unit is adapted to set a magnification rate of the guidance information with low priority smaller than that of the guidance information with high priority if the display position of the guidance information for the second display region (62) is outside the display screen of the display device (42)
due to enlargement of the guidance information.

## Patentansprüche

1. Fahrzeugnavigationsgerät mit:
(a) einer Displayeinrichtung (42) mit einem Bildschirm, wobei die Displayeinrichtung dazu geeignet ist, Führungsinformation für einen Fahrer darzustellen, wobei der Bildschirm mindestens einen ersten (61) und einen zweiten (62) Darstellungsbereich aufweist, wobei der erste Darstellungsbereich (61) näher an einer Fahrerposition (60) angeordnet ist als der zweite Darstellungsbereich (62);
(b) einer Führungsinformationsabrufeinheit, die dazu geeignet ist, Führungsinformation zu erhalten; und
(c) einer Displayeinheit, die dazu geeignet ist, die erhaltene Führungsinformation auf der Displayeinrichtung (42) derart darzustellen, dass die Darstellungsgröße der im zweiten Darstellungsbereich (62) dargestellten Führungsinformation größer ist als die Darstellungsgröße der im ersten Darstellungsbereich (61) dargestellten Führungsinformation;
**dadurch gekennzeichnet, dass**
(d) die Führungsinformation priorisiert und die Displayeinheit dazu geeignet ist, einen Vergrößerungsfaktor von Führungsinformation, die eine niedrigere Priorität hat als Führungsinformation mit einer hohen Priorität, einzustellen, wenn die Darstellungsposition der Führungsinformation für den zweiten Darstellungsbereich (62) sich aufgrund einer Vergrößerung der Führungsinformation außerhalb des Bildschirms der Displayeinrichtung (42) befindet.

2. Fahrzeugnavigationsgerät nach Anspruch 1, mit einer Positionserfassungseinheit, die dazu geeignet ist, eine Position (60) des Fahrers zu erfassen, wobei die Displayeinheit die erhaltene Position verwendet, um die in der Nähe des Fahrers angeordnete Seite der Displayeinrichtung und die vom Fahrer entfernte Seite der Displayeinrichtung zu bestimmen.

3. Fahrzeugnavigationsgerät nach Anspruch 1 oder 2, wobei die Displayeinheit dazu geeignet ist, einen Darstellungszustand der Führungsinformation derart zu ändern, dass die Führungsinformation auf dem Bildschirm dargestellt wird.

4. Fahrzeugnavigationsprogramm unter Verwendung eines Computers zum Realisieren
einer Führungsinformationsäbruffunktion zum Erhalten von Führungsinformation und zum Bestimmen einer Fahrerposition, und
einer Darstellungsfunktion zum Darstellen der erhaltenen Führungsinformation auf einer Displayeinrichtung mit einem Bildschirm, wobei der Bildschirm mindestens einen ersten (61) und einen zweiten (62) Darstellungsbereich aufweist, wobei der erste Darstellungsbereich (61) näher an der Fahrerposition (60) angeordnet ist als der zweite Darstellungsbereich (62), so dass die Darstellungsgröße der im zweiten Darstellungsbereich darzustellenden Führungsinformation größer ist als die Darstellungsgröße der im ersten Darstellungsbereich darzustellenden Führungsinformation;
**dadurch gekennzeichnet, dass**
die Führungsinformation priorisiert und die Displayeinheit dazu geeignet ist, einen Vergrößerungsfaktor von Führungsinformation, die eine niedrigere Priorität hat als Führungsinformation mit einer hohen Priorität, einzustellen, wenn die Darstellungsposition der Führungsinformation für den zweiten Darstellungsbereich (62) sich aufgrund einer Vergrößerung der Führungsinformation außerhalb des Bildschirms der Displayeinrichtung (42) befindet.

## Revendications

1. Dispositif de navigation pour véhicule comprenant :
(a) un dispositif d'affichage (42) comprenant un écran d'affichage et adapté pour afficher des informations de guidage à un conducteur, dans lequel l'écran d'affichage comprend au moins une première (61) et une seconde (62) région d'affichage, la première région d'affichage (61) étant plus près de la position du conducteur (60) que la seconde région d'affi.chage (62) ;
(b) une unité d'acquisition d'informations de guidage adaptée pour obtenir les informations de guidage ; et
(c) une unité d'affichage adaptée pour afficher les informations de guidage obtenues sur le dispositif d'affichage (42) de sorte que la taille d'affichage des informations de guidage affichées sur la seconde région d'affichage (62) est plus grande que la taille d'affichage des informations de guidage affichées dans la première région d'affichage (61), **caractérisé en ce que**
(d) les informations de guidage sont hiérarchisées, et l'unité d'affichage est adaptée pour déterminer un taux de grossissement des informations de guidage avec une faible priorité inférieure à celle des informations de guidage avec une haute priorité si la position d'affichage des informations de guidage pour la seconde région d'affichage (62) est à l'extérieur de l'écran d'affichage du dispositif d'affichage (42) en raison du grossissement des informations de guidage.

2. Dispositif de navigation pour véhicule selon la revendication 1, comprenant une unité d'acquisition de position adaptée pour obtenir une position (60) du conducteur, dans lequel l'unité d'affichage utilise la position obtenue pour déterminer le côté du dispositif d'affichage à proximité du conducteur et le côté éloigné du conducteur.

3. Dispositif de navigation pour véhicule selon la revendication 1 ou 2, dans lequel l'unité d'affichage est adaptée pour modifier un état d'affichage des informations de guidage de sorte que les informations de guidage sont affichées sur l'écran d'affichage.

4. Programme de navigation pour véhicule utilisant un ordinateur pour réaliser une fonction d'acquisition d'informations de guidage pour obtenir des informations de guidage et pour obtenir la position d'un conducteur, et
une fonction d'affichage pour afficher les informations de guidage obtenues sur un dispositif d'affichage avec un écran d'affichage, dans lequel l'écran d'affichage comprend au moins une première (61) et une seconde (62) région d'affichage, la première région d'affichage (61) étant plus près de la position du conducteur (60) que la seconde région d'affichage (62), de sorte que la taille d'affichage des informations de guidage à afficher dans la seconde région d'affichage est plus grande que la taille d'affichage des informations de guidage à afficher dans la première région d'affichage,
**caractérisé en ce que** les informations de guidage sont hiérarchisées, et l'unité d'affichage est adaptée pour déterminer un taux de grossissement des informations de guidage avec une faible priorité inférieure à celle d'une information de guidage avec une haute priorité si la position d'affichage des informations de guidage pour la seconde région d'affichage (62) est à l'extérieur de l'écran d'affichage du dispositif d'affichage (42) en raison du grossissement des informations de guidage.
